# EUROPEAN PATENT APPLICATION

(11) **EP 1 167 015 A2**
(43) Date of publication of application: **02.01.2002**
(21) Application number: 01114625.5
(22) Date of filing: 19.06.2001
(51) Int. Cl.: B32B 27/12, B32B 5/26

(54) **Composite fabric with surface and back layers and process for producing the same**

(30) Priority: 27.06.2000 JP 2000192597
(71) Applicant: SANKURIA CO. LTD., Tokyo 104-0061 (JP)
(72) Inventor: Kimura, Keisuke, Chuo-ku, Tokyo 104-0061 (JP)
(74) Representative: Schickedanz, Willi, Dr. Dipl.-Ing.

(57) **Abstract**

While surface layer fabric 1 is fed from feed roller 2 for supply of surface layer fabric 1, nylon film sheet whose principal component is a polyamide elastomer (also referred to as "thermal adhesion film") 3 is fed from feed roller 4 for supply of thermal adhesion film 3 and, further, back layer fabric 5 is fed from feed roller 6 for supply of back layer fabric 5. The feedings are so effected as to interpose the thermal adhesion film 3 between the surface layer fabric 1 and the back layer fabric 5. Thereafter, a thermal adhesion is effected to thereby bond the surface layer fabric 1 and the back layer fabric 5 to each other. Thus, composite fabric with surface and back layers 7 is obtained. The above thermal adhesion is continuously carried out while feeding the surface layer fabric 1 and the back layer fabric 5 having the thermal adhesion film 3 interposed therebetween to a gap between processing rollers 8, 9 of processing apparatus 10. Thus, without detriment to the properties and functions of the surface layer fabric and back layer fabric, the composite fabric which maintains its inherent feeling and which is excellent in water resistance, oil resistance, heat resistance, moisture permeability, solvent resistance and peeling resistance can be produced by the process free from the problem of environmental pollution attributed to hazardous substances such as dioxin occurring at the time of thermocompression bonding.

## Description

### FIELD OF THE INVENTION

The present invention relates to a composite fabric with surface and back layers for use in, for example, shoe surface materials, suspended curtains or clothing ornaments, and relates to a process for producing the same.

### BACKGROUND OF THE INVENTION

The composite fabric with surface and back layers for use in, for example, shoe surface materials, suspended curtains or clothing ornaments is generally produced by a process comprising overlaying a given surface layer fabric with an adherent vinyl chloride sheet (film sheet) and performing a thermocompression bonding of the film sheet to the surface layer fabric so that the film sheet is formed into a surface material film on a surface of the surface layer fabric to thereby obtain a desired composite fabric.

In the invention of Japanese Patent Application Laid-Open Specification No. 10(1998)-166490, a given nonwoven fabric sheet is dipped in a solution of hydrophilic synthetic resin and taken out, and one side thereof is overlaid with, for example, a nonwoven fabric or a woven or knitted fabric constituted of a hydroxylated fiber, followed by pressure application, heating and drying. Thus, there is obtained a moisture retentive composite sheet fabric which is suitable for an external surface material for wearing outdoors or an agricultural covering material.

Further, in the invention of Japanese Patent Application Laid-Open Specification No. 9(1997)-109260, a polyurethane thermal adhesion film is first superimposed on a surface of a water repellent cloth. Subsequently, a pattern sheet of thermoplastic synthetic resin is superimposed on an upper surface of the polyurethane thermal adhesion film. Thereafter, pressure is applied onto the pattern sheet with the use of a die, followed by high-frequency dielectric heating. Thus, the pattern sheet is secured to the water repellent cloth. In this manner, ornamental pattern sheets can be secured to sportswears, jumpers, hats, etc.

Still further, in the invention of Japanese Patent Application Laid-Open Specification No. 6(1994)-270364, in the thermal adhesion of a laminate sheet onto a surface of an expanded resin substrate, the laminate sheet is provided with a heat sensitive adhesive resin layer (hot-melt adhesive layer), and the heat sensitive adhesive resin layer is first preheated and thereafter subjected to main heating. In this manner, the thermal adhesion of the laminate sheet to plate substrates can be accomplished.

In the above-mentioned process comprising overlaying a given surface layer fabric with a film sheet and performing a thermocompression bonding so that the film sheet is formed into a surface material film to thereby obtain a desired composite fabric, among the above prior art processes, the film sheet per se is formed into a surface material. Therefore, it is infeasible to provide a process for producing a composite fabric while bonding a given fabric constituted of a material other than that of the film sheet, as a back layer fabric, to the surface layer fabric. That is, the film sheet per se is not one having bonding capability and has a drawback in being unsuitable for a method of combining a given back layer fabric with the surface layer fabric. For example, the production of a composite fabric by bonding of stretch materials (tricot fabric bonded to stretch fabric) to each other, or the production of a composite fabric by bonding a stretch fabric as a back layer fabric to a synthetic leather (artificial leather) as a surface layer fabric, cannot be realized by the use of the film sheet per se.

Accordingly, the processes of Japanese Patent Application Laid-Open Specification Nos. 10(1998)-166490, 9(1997)-109260 and 6(1994)-270364 wherein either of the surface layer fabric and the back layer fabric is impregnated with an adherent resin by dipping in a solution of hydrophilic synthetic resin, or use is made of a polyurethane thermal adhesion film or a heat sensitive adhesive resin (hot-melt adhesive), have been developed and are now being practiced for obtaining a composite fabric with surface and back layers of desired fabrics bonded to each other.

However, it may occur that the prior impregnation of either of the surface layer fabric and the back layer fabric with the adherent resin is impracticable in view of the properties of the fabric, or that, even if practicable, the impregnation causes such a disadvantage in processing that the number of process steps for composite fabric production is increased, or cost increase is inevitable.

When, for example, a synthetic leather is used as the surface layer fabric, also, the process wherein a back layer fabric is bonded to the surface layer fabric with the application of a rubber cement is carried out instead of the above impregnation with the adherent resin. However, this process has a drawback of extremely poor operation efficiency in that not only is it required to apply a rubber cement to the back layer fabric as well as to the synthetic leather but also, at the time of bonding of the back layer fabric to the surface layer fabric, compression bonding must be effected by the use of a compression bonding machine while once more applying a rubber cement. Moreover, the production of, for example, a composite fabric comprising a synthetic leather and, bonded thereto, a stretch material invites such a disadvantage that not only would the stretchability of the stretch material be deteriorated by the rubber cement to thereby cause the inherent function thereof to be lost, but also the properties of the synthetic leather per se would be deteriorated by heating effected at the time of compression bonding. Further, the production invites such a disadvantage that a surface peeling would be caused by the rubber cement.

In the use of natural leathers in place of the synthetic leather, the bonding of natural leathers and a back layer fabric for obtaining a composite fabric is accomplished by either of two bonding methods, impregnation and spreading of a latex being a liquid synthetic rubber. In these methods, adhesive latex remains on both the natural leathers and the back layer fabric, thereby disenabling processing of the composite fabric while taking up the same. Specifically, the shapes of individual natural leathers are different from each other because of the processing thereof, so that portions of latex spread on the back layer fabric are exposed. When taking-up of the composite fabric is effected, the exposed spread latex surface is brought into direct contact with surfaces of natural leathers, thereby deteriorating the product value of the composite fabric.

Therefore, in these instances, it is the current practice that the bonded composite fabric is cut into pieces of given shapes, which cut pieces are piled on each other to thereby carry out post-processing.

Further, the process wherein use is made of a polyurethane thermal adhesion sheet or a hot-melt adhesive has such a drawback that, depending on the type and properties of fabric for use in the surface layer fabric or back layer fabric, the use may be unsuitable for or may damage the fabric to thereby disenable carrying out the process.

For example, in the production of a composite fabric constituted of stretch materials bonded together, specifically in the production of a composite fabric by bonding together a stretch fabric as the surface layer fabric and a tricot fabric as the back layer fabric, the performing of the process of impregnating a fabric with an adherent resin according to the invention of Japanese Patent Application Laid-Open Specification No. 10(1998)-166490 causes a first drawback in that the impregnating operation is needed and inevitable to result in poor operation efficiency. There is a second drawback in that, depending on the type of adherent resin, the stretchability, i.e., the function to be exhibited by the stretch fabric or tricot fabric is lost, and that the inherent properties, such as penetrability and air permeability, of the stretch material are deteriorated, thereby disenabling exertion of the inherent advantages of the stretch material per se.

Further, the bonding methods of Japanese Patent Application Laid-Open Specification Nos. 9(1997)-109260 and 6(1994)-270364 wherein use is made of a polyurethane thermal adhesion sheet or a heat sensitive adhesive resin (hot-melt adhesive), although operation efficiency is enhanced by the avoidance of impregnating operation, have the same drawback as the above second drawback in that the inherent function and properties of the stretch material are lost by the polyurethane thermal adhesion sheet or hot-melt adhesive.

Specifically, not only the stretchability of stretch fabric or tricot fabric but also the properties, such as penetrability and air permeability, thereof are lost by the polyurethane thermal adhesion sheet or hot-melt adhesive. Thus, there is caused a drawback such that not only is the inherent feeling of the stretch material per se lost but also the produced composite fabric becomes a hard fabric.

Still further, as a third drawback, the use of a strongly adherent vinyl chloride film sheet in place of the polyurethane thermal adhesion sheet or hot-melt adhesive sheet with low adherence causes dioxin formation polluting environment.

In the production of a composite fabric by bonding a stretch fabric to a synthetic leather instead of the above bonding of stretch materials, a rubber cement is generally employed as aforementioned. This process of producing the composite fabric has a drawback in that operations are laborious because of the need to apply a rubber cement to both the synthetic leather and the stretch fabric and to spread a rubber cement once more prior to a compression bonding by means of a compression bonding machine. The process has another drawback in that, also, the inherent function and properties of the stretch fabric are lost by the rubber cement. Even if the polyurethane thermal adhesion sheet or hot-melt adhesive is applied, the process invites the same drawbacks as in the above bonding of stretch materials and cannot solve these problems.

Moreover, in the inventions described in the above prior art literature, the processing (thermocompression bonding) involves such a problem that not only are unpleasant odors yielded but also hazardous substances such as dioxin are formed as aforementioned. There is another problem such that no composite fabric which is satisfactory in all requirements for water resistance, oil resistance, moisture permeability, solvent resistance, etc. can be obtained; thus, some types unfavorably have poor adhesion and are likely to suffer peeling, and, in some types, water repellent fabrics cannot be used because of poor adhesion.

### SUMMARY OF THE INVENTION

The present invention has been made with a view toward solving the above problems. Therefore, it is an object of the present invention to provide a composite fabric which can overcome the above problems of the inventions described in the above prior art literature. It is another object of the present invention to provide a process for producing the composite fabric.

The foregoing and other objects, features and advantages of the present invention will become apparent from the following detailed description and appended claims taken in connection with the accompanying drawings.

### BRIEF DESCRIPTION OF THE DRAWING

Fig. 1 is an explanatory view for one embodiment of the present invention;
Fig. 2 is an explanatory view for another embodiment of the present invention; and
Fig. 3 is an explanatory view for a further embodiment of the present invention.

### DETAILED DESCRIPTION OF THE INVENTION

The present invention will be described in detail below with reference to the appended drawings.

In one aspect of the present invention, for attaining the objects of the present invention, there is provided a composite fabric with surface and back layers, comprising a surface layer fabric and a back layer fabric bonded together with a film sheet whose principal component is a polyamide elastomer.

In the composite fabric with surface and back layers according to the present invention, the back layer fabric opposite to the surface layer fabric is preferably constituted of an interlining or padding cloth. On the other hand, the surface layer fabric is preferably constituted of any of a nonwoven fabric, a cotton cloth, a synthetic resin sheet and composite sheets thereof. In the composite fabric with surface and back layers according to the raised sheet, it is preferred that the surface layer fabric be constituted of a raised sheet while the back layer fabric is constituted of a cotton cloth. It is also preferred that both the surface layer fabric and the back layer fabric be constituted of a nonwoven fabric. Further, preferably, the back layer fabric may be constituted of a stretch material. Still further, in the composite fabric with surface and back layers according to the present invention, the surface layer fabric may preferably be constituted of a synthetic leather (artificial leather) while the back layer fabric may be constituted of a stretch material. The surface layer fabric may also preferably be constituted of a natural leather.

In the composite fabric with surface and back layers according to the present invention, the film sheet is preferably constituted of a nylon film sheet whose principal component is a polyamide elastomer.

In another aspect of the present invention, there is provided a process for producing a composite fabric with surface and back layers, comprising interposing a film sheet whose principal component is a polyamide elastomer between a surface layer fabric and a back layer fabric and, while heating the film sheet, performing a thermocompression bonding of the surface layer fabric and the back layer fabric.

In the process of the present invention, it is preferred that the film sheet be heated at 150°C or higher. In particular, it is especially preferred that the film sheet be heated at 155°C when the surface layer fabric and the back layer fabric are regular fabrics and 160°C when the surface layer fabric and the back layer fabric are thick fabrics or nylon fabrics.

In the process of the present invention, the heating of the film sheet is preferably performed by means of a heating roller. Further, in the process of the present invention, it is preferred that a fabric to be preheated among the surface layer fabric and the back layer fabric be preheated before the interposing of the film sheet between the surface layer fabric and the back layer fabric.

Still further, in the process of the present invention, the heating of the film sheet after the interposing of the film sheet between the surface layer fabric and the back layer fabric is preferably performed by means of a heating roller with the use of a protective sheet.

The present invention enables providing a composite fabric, irrespective of the types of the surface layer fabric and back layer fabric. Further, the present invention enables bonding the surface layer fabric and the back layer fabric to each other without detriment to the inherent properties and functions of the surface layer fabric and back layer fabric, and thus enables producing the desired composite fabric with high operation efficiency.

Furthermore, the present invention enables producing a composite fabric without the occurrence of hazardous substances, such as dioxin, by heating, thus without the problem of environmental pollution. Still further, the present invention enables producing various composite fabrics comprising a bonded water repellent fabric which are excellent in not only water resistance, oil resistance, heat resistance, moisture permeability and solvent resistance but also peeling resistance.

### EFFECT OF THE INVENTION

By virtue of the composite fabric with surface and back layers and the process for producing the same according to the present invention, not only can production of a composite fabric not influenced by the types of surface layer and back layer fabrics be provided but also the surface layer and back layer fabrics can be bonded to each other without detriment to the inherent properties and functions of the surface layer and back layer fabrics, thereby enabling production of a desired composite fabric with high operation efficiency.

Further, the present invention enables producing various composite fabrics without the incidental formation of hazardous substances such as dioxin during heating to thereby avoid the problem of environmental pollution, which various composite fabrics can be excellent in not only durability, oil resistance, heat resistance, moisture permeability and solvent resistance but also peeling resistance and can result from bonding of water resistant fabrics.

### PREFERRED EMBODIMENT OF THE INVENTION

Preferred embodiments of the present invention will now be described with reference to the appended drawings, which, however, in no way limit the scope of the present invention.

### Embodiment 1

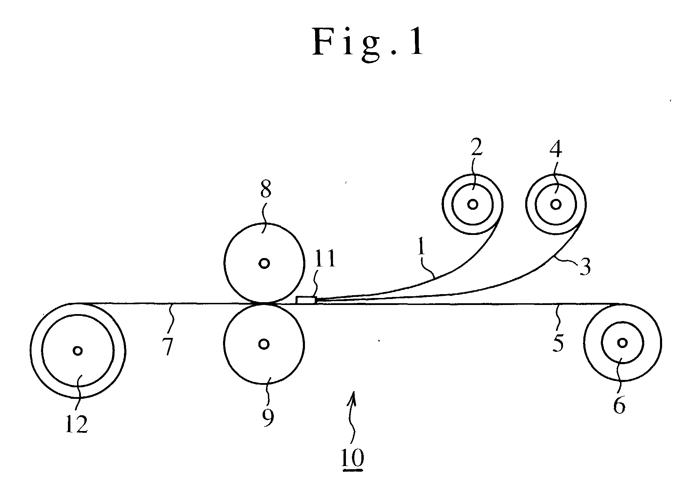

Fig. 1 is an explanatory view for one mode of the process for producing a composite fabric with surface and back layers according to the present invention.

Referring to Fig. 1, while surface layer fabric 1 is fed from feed roller 2 for supply of surface layer fabric 1, nylon film sheet whose principal component is a polyamide elastomer (hereinafter referred to simply as "thermal adhesion film"; one as thick as 30 to 60 µm generally employed) 3 is fed from feed roller 4 for supply of thermal adhesion film 3 and, further, back layer fabric 5 is fed from feed roller 6 for supply of back layer fabric 5.

The feedings are so effected as to interpose the thermal adhesion film 3 between the surface layer fabric 1 and the back layer fabric 5. Thereafter, a thermal adhesion is effected to thereby bond the surface layer fabric 1 and the back layer fabric 5 to each other. Thus, composite fabric with surface and back layers 7 is obtained.

The interposition of the thermal adhesion film 3 between the surface layer fabric 1 and the back layer fabric 5 and the subsequent thermal adhesion processing can be performed by the use of processing apparatus 10 shown in Fig. 1.

The above thermal adhesion can continuously be carried out by feeding the surface layer fabric 1, the thermal adhesion film 3 and the back layer fabric 5 from the rollers 2, 4 and 6, respectively, into a gap between a vertically arranged pair of heating/compression processing rollers 8, 9 of the processing apparatus 10 shown in Fig. 1. Before insertion into the gap between the vertically arranged pair of heating/compression processing rollers (hereinafter referred to simply as "processing rollers") 8, 9 to thereby effect a thermal adhesion, the surface layer fabric 1, the thermal adhesion film 3 and the back layer fabric 5 are temporarily bound with the use of temporary binding tape 11.

Of these processing rollers 8, 9 for use in the thermal adhesion, one processing roller 8 is a silicone roller for compression. The other processing roller 9 consists of a polytetrafluoroethylene roller for heating. An arrangement is so made that the heating and compression required for the thermal adhesion processing can be realized by the processing rollers 8, 9.

For example, when both the surface layer fabric 1 and the back layer fabric 5 consist of any of ordinary nonwoven fabrics, cotton cloths, synthetic resin cloths and composite cloths thereof, it is preferred that the thermal adhesion film 3 have a melting point of 155°C and that an arrangement be so made that heating is conducted at the temperature. When either one of the surface layer fabric 1 and the back layer fabric 5 consists of a thick fabric or a nylon fabric, it is preferred that the thermal adhesion film 3 have a melting point of 160°C and that an arrangement be so made that heating is conducted at the temperature.

These conditions can be regulated by controlling the compression and heating by means of the heating/compression processing rollers 8, 9 and by controlling conditions relating to heat conductivity.

Specifically, the speed of processing by means of the processing rollers 8, 9 is about 3 m/min when a high speed is demanded and about 2 m/min when a low speed is demanded.

Thus, two-layer composite fabric 7 consisting of the surface layer fabric 1 and the back layer fabric 5 can be produced by setting the processing rollers 8, 9 for given compression and heating conditions and by, while feeding into the gap of the processing rollers 8, 9 the surface layer fabric 1 and the back layer fabric 5 having the thermal adhesion film 3 interposed therebetween after the temporary binding by means of the temporary binding tape 11, heating the thermal adhesion film 3 at, for example, 150 to 160°C to thereby melt the thermal adhesion film 3 and simultaneously accomplishing bonding of the surface layer fabric 1 and the back layer fabric 5 to each other to thereby finalize the thermal adhesion processing.

The thus produced composite fabric 7 is wound round take-up roller 12.

In this manner, a sequence of operations are rapidly performed continuously.

In the thermal adhesion, before the feeding, into the gap of the processing rollers 8, 9, the surface layer fabric 1 and the back layer fabric 5 having the thermal adhesion film 3 interposed therebetween after the temporary binding on the processing apparatus 10, it is preferred to effect idle run of the processing rollers 8, 9 for about 10 min so as to preheat the compression roller 8 from the viewpoint that a uniform even heat melting of the thermal adhesion film 3 can be realized.

In the same effect, the above idle run of the processing rollers 8, 9 of the processing apparatus 10 can be replaced by effecting idle passing of the surface layer fabric 1 fed on the side of compression roller 8, among the surface layer fabric 1 and back layer fabric 5, through the gap between the processing rollers 8, 9 once so as to preheat the surface layer fabric 1 before the thermal adhesion of the surface layer fabric 1 and the back layer fabric 5 having the thermal adhesion film 3 interposed therebetween.

The preheating of the surface layer fabric 1 is not limited to the above pass through the gap between the processing rollers 8, 9, and other preheating means can be employed. It is satisfactory to select appropriate preheating means in conformity with the type of fabric for use in the surface layer fabric 1 and back layer fabric 5 and implement the same.

### Embodiment 2

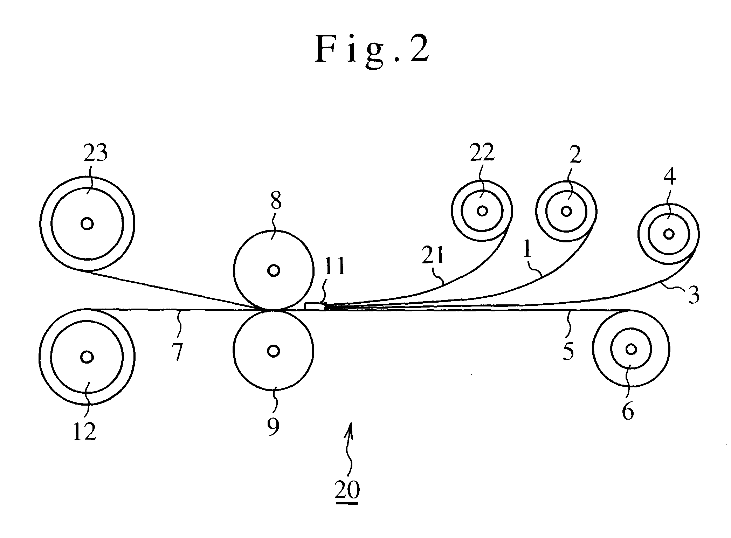

Fig. 2 is an explanatory view for Embodiment 2 of the present invention.

In the use of the processing apparatus 10 of Embodiment 1 shown in Fig. 1, during the thermal adhesion described in Embodiment 1, heat is conducted from the heating roller 9 to the compression roller 8 with the result that the surface of the compression roller 8 is heated. Among the surface layer fabric 1 and the back layer fabric 5, for example, the surface layer fabric 1 may be damaged by the heat of the compression roller 8. In this Embodiment 2, protection against the heat is implemented.

Processing apparatus 20 of Fig. 2 is so arranged that, in the thermal adhesion by means of the processing rollers 8, 9, cover cloth 21 for protecting the surface of the surface layer fabric 1 is interposed between the surface layer fabric 1 and the compression roller 8.

Specifically, the processing apparatus 20 is so constructed that the cover cloth 21 is fed from feed roller 22 for supply of the cover cloth 21 and, after the thermal adhesion by means of the processing rollers 8, 9, wound round take-up roller 23.

When the surface layer fabric 1 and the back layer fabric 5 having the thermal adhesion film 3 interposed therebetween are fed into the gap between the processing rollers 8, 9, the surface of the surface layer fabric 1 is overlaid with the cover cloth 21 so as to protect the surface of the surface layer fabric 1. Thus, the damaging of the surface layer fabric 1 by the heat of the compression roller 8 can be avoided.

As the cover cloth 21, a cloth of material and thickness which can match the surface layer fabric 1 to be protected is selected taking into account the heat resistance temperature of material to be protected, and applied.

### Embodiment 3

Particular mode of the process for producing desirable composite fabric 7 with surface layer fabric 1 and back layer fabric 5 by the use of the processing apparatuses 10 and 20 shown in Embodiments 1 and 2, respectively, will be described below.

First, the production of composite fabric 7 comprising an interlining or padding cloth as the back layer fabric 5 and, bonded thereto, any of a cotton cloth, a nonwoven fabric, a synthetic resin sheet and composite sheets thereof as the surface layer fabric 1 will be described.

With respect to this composite fabric 7, because the above cotton cloth, nonwoven fabric, synthetic resin sheet or composite sheet thereof is used as the surface layer fabric 1, it is not needed to consider the damaging thereof by the heat of the compression roller 8 in the thermal adhesion processing. Therefore, the production can be conducted with the use of the processing apparatus 10 of Fig. 1 (when the damaging must be considered, use is made of the processing apparatus 20 of Fig. 2).

The thickness of the interlining or padding cloth is generally in the range of, for example, 0.2 to 1 mm. In the use of the processing apparatus 10 of Fig. 1, it may occur that the thermal adhesion film 3 interposed between the interlining or padding cloth and the surface layer fabric 1 cannot be uniformly and evenly melted by the heating by means of the heating roller 9 only.

Therefore, for attaining uniform melting of the thermal adhesion film 3 and stabilization of the processing speed, it is preferred to employ means for preheating the interlining or padding cloth.

The preheating of the interlining or padding cloth can be accomplished in the processing apparatus 10, although other methods, such as the method of passing the interlining or padding cloth through a heat atmosphere controlled at given temperature (for example, preheating chamber equipped with means for controlling the chamber temperature).

Specifically, referring to Fig. 1, the interlining or padding cloth can be preheated by feeding the interlining or padding cloth from the feed roller 6 and effecting idle passing of only the interlining or padding cloth as the back layer fabric 5 through the gap between the processing rollers 8, 9 of which the heating roller 9 has been heated at given preheating temperature, for example, 120°C before the combining (temporary binding) with the surface layer fabric 1 and thermal adhesion film 3.

The above processing by means of the processing rollers 8, 9, although generally performed at a speed of 2 to 3 m/min, can be carried out at a speed appropriately selected taking into account the thickness and material of interlining or padding cloth and the thermal conductivity thereof.

After the preheating, the interlining or padding cloth is fed as the back layer fabric 5 from the feed roller 6. Referring to Fig. 1, the fed interlining or padding cloth is coupled with the surface layer fabric 1 and the thermal adhesion film 3 and bound by means of the temporary binding tape 11. The whole, as described in Embodiment 1 above, is passed through the gap between the compression/heating rollers 8, 9, so that the interlining or padding cloth and the surface layer fabric 1 are bonded to each other by thermocompression bonding by means of the thermal adhesion film 3 (the thickness thereof is 30 µm in this instance, but can be in the range of 30 to 60 µm). Thus, composite fabric 7 can be obtained.

Composite fabric 7 wherein no thermal damage is found in both the surface layer fabric 1 and the interlining or padding cloth and which has the inherent feeling of fabric without detriment to the inherent properties and functions of surface layer fabric 1 and interlining or padding cloth can be produced by performing the processing while setting the temperature of heating roller 9 for thermal adhesion for 160 to 170°C and setting the processing speed for 2 to 3 m/min.

### Embodiment 4

When nonwoven fabrics are simultaneously used as the surface layer fabric 1 and the back layer fabric 5, use can be made of the processing apparatus 10 of Fig. 1 as it is. Because the thermal conductivity of nonwoven fabrics is high, uniform even bonding of the surface layer fabric 1 and the back layer fabric 5 can be effected by carrying out a thermal adhesion under such conditions that the temperature of heating roller 9 and processing speed are set for 155°C and 2 to 3 m/min, respectively.

Thus, there can be obtained composite fabric 7 having the inherent feeling of nonwoven fabric without detriment to the inherent properties and functions of nonwoven fabric.

### Embodiment 5

The production of composite fabric 7 wherein a raised fabric (material obtained by scratching a surface of given fabric with needle-shaped claws to thereby form a fine coat of fur) is used as the surface layer fabric 1 while a thick cotton cloth (for example, 2 mm thickness) is used as the back layer fabric 5 will be described below.

In this production as well, the processing with the use of the processing apparatus 10 of Fig. 1 will be described below.

First, the raised fabric as the surface layer fabric 1 and the thick cotton cloth as the back layer fabric 5 are preheated in a preheating chamber warmed at 80°C for a given period of time.

Instead, the preheating can be performed by separately processing the raised fabric and the thick cotton cloth in the same manner as performed for the interlining or padding cloth in Embodiment 3.

Thereafter, the raised fabric and the cotton cloth are fed from feed rollers 2 and 6, respectively, coupled with the thermal adhesion film 3 fed from feed roller 4, and bound by means of the temporary binding tape 11. The whole is passed through the gap between the processing rollers 8, 9 of which the heating roller 9 has its temperature set for 155 to 160°C at a speed of 2 to 3 m/min to thereby effect a thermal adhesion. Thus, composite fabric 7 comprising the raised fabric and the cotton cloth bonded to each other is obtained.

In this Embodiment, the thus obtained composite fabric 7 is wound round take-up roller 12 and thereafter passed through a dry laminating machine at a speed of 15 m/min to thereby effect heating post-treatment, which uniformizes the heating processing to thermal adhesion film 3 applied in the thermal adhesion by the processing rollers 8, 9 of Fig. 1.

Thus, in this Embodiment as well, there can be accomplished the production of composite fabric 7 having the inherent properties and functions and also inherent feeling of the raised fabric and cotton cloth without damaging them.

### Embodiment 6

In the use of a synthetic leather and a stretch material as the surface layer fabric 1 and back layer fabric 5, respectively, the processing is carried out by means of the processing apparatus 20 of Fig. 2.

Specifically, the maximum temperature of heat resistance of synthetic leathers is 130°C, so that heating at 120 to 150°C would cause the synthetic leathers per se to suffer surface peeling or surface plasticization.

Therefore, it is preferred that the thermal adhesion processing by passing through the gap between the processing rollers 8, 9 be rapidly performed at minimum temperatures and maximum speeds, for example, under 155°C and 3 m/min conditions.

With respect to the stretch material, the thermal adhesion processing speed can be increased, and the conditions for synthetic leather protection can be reinforced, by preheating the stretch material by means of the preheating means mentioned in Embodiments 3 and 5.

Thus, first, the stretch material 5 fed from feed roller 6 is preheated by passing (idly passing) the same through the gap between heating roller 9 heated at 120°C and compression roller 8.

The preheated stretch material 5 fed from feed roller 6 is coupled with the synthetic leather 1 fed from feed roller 2 and the thermal adhesion film 3 fed from feed roller 4, and bound by means of the temporary binding tape 11. The whole is passed through the gap between heating roller 9 heated at 155°C and compression roller 8 at a speed of 3 m/min.

In the thermal adhesion, referring to Fig. 2, cover cloth (thick cotton cloth, for example, about 2 mm thick cotton cloth employed) 21 is fed from feed roller 22 and interposed between an upper surface of the synthetic leather 1 and the compression roller 8. Thus, the upper surface of the synthetic leather 1 is protected.

As a result, desired composite fabric 7 wherein the feeling of the synthetic leather 1 per se is retained and wherein the stretchability of the stretch material 5 is not deteriorated by the thermal adhesion film 3 can be obtained.

The use of the nylon film sheet whose principal component is a polyamide elastomer as the thermal adhesion film 3 enables not only bonding without damaging the stretchability of the stretch material by virtue of the stretching activity of the nylon film sheet but also avoiding the deterioration of the inherent properties, such as air permeability and penetrability, of the stretch material.

### Embodiment 7

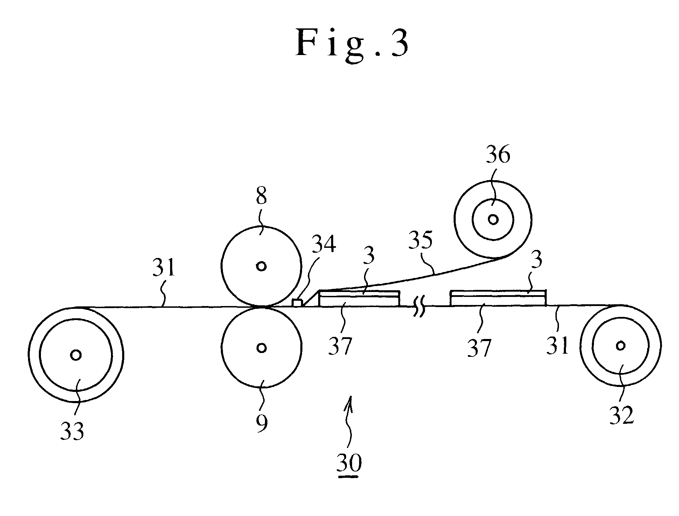

Fig. 3 shows one mode of the process for producing a composite fabric composed of a natural leather and a backing fabric.

The natural leather is generally processed piece by piece and provided, so that continuous feeding thereof cannot be effected.

Therefore, in the processing apparatus 30 of Fig. 3, natural leathers 37 one by one are temporarily fixed at intervals on cover cloth (thick cotton cloth) 31 for protecting the surface of the natural leathers 37.

Before the fixing of the natural leathers 37 on the cover cloth 31, the thermal adhesion film 3 is cut into pieces of the same size as that of each natural leather 37 and superimposed on the natural leathers 37 as shown in Fig. 3.

Referring to Fig. 3, backing fabric 35 for the natural leathers 37 is fed from feed roller 36, and the front end portion of the backing fabric 35 is temporarily bound on the cover cloth 31 by means of temporary binding tape 34. The cover cloth 31 and the backing fabric 35 having the natural leathers 37 and the thermal adhesion film 3 interposed therebetween are passed through the gap between heating roller 9 heated at 155 to 160°C and compression roller 8. Thus, the backing fabric 35 is bonded to the back side of the natural leathers 37 by means of the thermal adhesion film 3.

The natural leathers 37 having undergone the thermal adhesion processing through the processing rollers 8, 9 so that the natural leathers 37 have been bonded to the backing fabric 35 are carried, while being superimposed on the cover cloth 31, by winding of the cover cloth 31 round take-up roller 33 and taken up by the take-up roller 33. Thus, bonding of the backing fabric 35 to the natural leathers 37 can be accomplished continuously.

This processing enables bonding the backing fabric 35. to the natural leathers 37 without detriment to the stretchability of the natural leathers 37 as experienced in the above processing of the stretch material. The natural leathers 37 are thus processed into a composite fabric retaining the inherent feeling of the natural leathers 37.

Moreover, in the conventional bonding with the use of a rubber cement, the rubber cement applied to backing fabric cotton does not have the same shape as that of natural leathers and hence is exposed. Therefore, continuous operation including stacking and winding of the natural leathers after the processing into composite fabric cannot be effected. In the conventional bonding, it is inevitable to cut the backing fabric along the contours of natural leathers bonded to the backing fabric after the processing into composite fabric.

By contrast, in this Embodiment, the natural leathers 37 together with the backing fabric 35 can be wound round the take-up roller 33 to thereby enable continuous operation. Further, the natural leathers 37 as many as demanded can be cut off from the backing fabric 35 and subjected to subsequent processing.

Therefore, the processing of this Embodiment enables resolving the problem of laboriousness experienced in the conventional bonding of natural leathers 37 to backing fabric 35, also enables simplifying and expediting operations, such as product control and transportation, after the bonding, and further enables simplifying the handling of natural leathers per se at the processing.

In order to demonstrate the effect brought about by this Embodiment of the present invention on the basis of experimental data, Table 1 gives results of a test comparing the composite fabric 7 (sample (1) in Table 1) produced in this Embodiment 5 with the use of nylon film sheet whose principal component is a polyamide elastomer with a composite fabric (sample (2) in Table 1) produced with the use of conventional EVA (hot-melt adhesive, heating temperature 120°C) in place of the nylon film sheet.

**Table 1**

| Test item | | | Test results | | Test method |
|---|---|---|---|---|---|
| | | | sample (1) | sample (2) | |
| water vapor transmission (g/m²•h) | | | 224 | 33 | JIS L 1099 A-1 |
| peel strerigth (CN) | in dry state | lengthwise | 1820 | 810 | JIS L 1089 |
| | in state of being wetted by water | lengthwise | 1650 | 108 | |
| | in state of being wetted by org. solvent (petroleum) | lengthwise | 1760 | 6.50 | |
| Cleaning solvent (JIS K 2201 No.5) used. | | | | | |

The following is apparent from the results of Table 1.
(1) The water vapor transmission through fabrics over a period of 24 hr was measured in accordance with Japanese Industrial Standard 1099A-1. As a result, it was found that the water vapor transmission through the composite fabric of the present invention was much greater than 224 g/m²·h. For comparison, the water vapor transmission through a both-side muslin composite fabric was measured by the water vapor transmission B-method, Japanese Industrial Standard 1099B-2, and found to be 189 g/m²·h. The water vapor transmission through the composite fabric of the present invention satisfied the water vapor transmission standard of 3000 g/m² over 24 hr for water permeable materials.
(2) The peel strength was measured in accordance with Japanese Industrial Standard L-1089 using cleaning solvent (Japanese Industrial Standard K-2201-5). As a result, it was found that the peel strength of the composite fabric of the present invention was 1820 CN in the dry state (lengthwise), 1650 CN in the state of being wetted by water (lengthwise) and 1760 CN in the state of being wetted by organic solvent (lengthwise). By contrast, the peel strength of the composite fabric wherein the EVA film was used was 810 CN in the dry state (lengthwise) and 6.50 CN in the state of being wetted by organic solvent (lengthwise).
(3) The values of peel strength attest to the water and oil resistances of the composite fabric of the present invention. Thus, the composite fabric of the present invention can be subjected to dry cleaning and water washing. In the use of water repellent materials, bonding thereof can be accomplished, without film repellence by the materials per se, by effecting a both-side thermocompression bonding at a breath with the use of 155°C heating roller. The composite fabric was immersed in thinners, petroleum and pink bond for 10 min, and the peel strength was measured. There was no substantial difference from the value of the table in the dry state, thereby attesting to the oil resistance thereof.

As apparent from the above Embodiments 1 to 7 and test results, the composite fabric of the present invention and the process for producing the same exert the following functions and effects.
(1) A composite fabric with high moisture permeability, and production thereof can be realized.
(2) A composite fabric with excellent solvent resistance, and production thereof can be realized.
(3) A composite fabric with excellent water resistance to thereby enable water washing and dry cleaning thereof, and production thereof can be realized.
(4) Thermal adhesion of water repellent fabrics can be effected, so that a composite fabric of water repellent materials, and production thereof can be realized.
(5) A composite fabric having excellent stretchability and retaining the inherent unique feeling of fabric used therein, and production thereof can be realized.
(6) A composite fabric which exhibits less peel than that of the conventional hot torte fill processed product and, depending on its variety, has a feeling as if it consisted of a single fabric, and production thereof can be realized.

## Claims

1. A composite fabric with surface and back layers, comprising a surface layer fabric and a back layer fabric bonded together with a film sheet whose principal component is a polyamide elastomer.

2. The composite fabric with surface and back layers according to claim 1, wherein the back layer fabric opposite to the surface layer fabric is constituted of an interlining or padding cloth.

3. The composite fabric with surface and back layers according to claim 1 or 2, wherein the surface layer fabric is constituted of any of a nonwoven fabric, a cotton cloth, a synthetic resin sheet and composite sheets thereof.

4. The composite fabric with surface and back layers according to claim 1, wherein the surface layer fabric is constituted of a raised sheet while the back layer fabric is constituted of a cotton cloth.

5. The composite fabric with surface and back layers according to claim 1, wherein both the surface layer fabric and the back layer fabric are constituted of a nonwoven fabric.

6. The composite fabric with surface and back layers according to claim 1, wherein the back layer fabric is constituted of a stretch material.

7. The composite fabric with surface and back layers according to claim 1, wherein the surface layer fabric is constituted of a synthetic leather (artificial leather) while the back layer fabric is constituted of a stretch material.

8. The composite fabric with surface and back layers according to claim 1, wherein the surface layer fabric is constituted of a natural leather.

9. The composite fabric with surface and back layers according to claim 1, wherein the film sheet is constituted of a nylon film sheet whose principal component is a polyamide elastomer.

10. A process for producing a composite fabric with surface and back layers, comprising interposing a film sheet whose principal component is a polyamide elastomer between a surface layer fabric and a back layer fabric and, while heating the film sheet, performing a thermocompression bonding of the surface layer fabric and the back layer fabric.

11. The process according to claim 10, wherein the film sheet is heated at 150°C or higher.

12. The process according to claim 10, wherein the film sheet is heated at 155°C when the surface layer fabric and the back layer fabric are regular fabrics and 160°C when the surface layer fabric and the back layer fabric are thick fabrics or nylon fabrics.

13. The process according to claim 10, wherein the heating of the film sheet is performed by means of a heating roller.

14. The process according to claim 10, wherein a fabric to be preheated among the surface layer fabric and the back layer fabric is preheated before the interposing of the film sheet between the surface layer fabric and the back layer fabric.

15. The process according to claim 10, wherein the heating of the film sheet after the interposing of the film sheet between the surface layer fabric and the back layer fabric is performed by means of a heating roller with the use of a protective sheet.
